# EUROPEAN PATENT APPLICATION

(11) **EP 4 538 017 A1**
(43) Date of publication of application: **16.04.2025**
(21) Application number: 24206063.0
(22) Date of filing: 11.10.2024
(51) Int. Cl.: B29C 45/76, B29C 45/84

(54) **INJECTION MOLDING MACHINE AND INJECTION MOLDING MACHINE SYSTEM INCLUDING THE SAME, AND CONTROLLER AND METHOD FOR CONTROLLING INJECTION MOLDING MACHINE**

(30) Priority: 12.10.2023 JP 2023176692
(71) Applicant: The Japan Steel Works, Ltd., Tokyo 141-0032 (JP)
(72) Inventor: HANAYAMA, Kazuhiro, Tokyo, 141-0032 (JP)
(74) Representative: Simmons & Simmons LLP (Munich)

(57) **Abstract**

An injection molding machine system (10) includes an injection molding machine (100), a cloud server (30), and a terminal apparatus (40). Cloud server (30) is configured to communicate with injection molding machine (100), and stores data indicative of an operating state of injection molding machine (100). Terminal apparatus (40) is configured to communicate with cloud server (30), and display information from cloud server (30). Injection molding machine (100) is configured to transmit the data to cloud server (30) at a predetermined timing and when injection molding machine (100) is not performing a molding operation.

## Description

### CROSS REFERENCE TO RELATED APPLICATIONS

This nonprovisional application is based on Japanese Patent Application No. 2023-176692 filed on October 12, 2023 with the Japan Patent Office, the entire contents of which are hereby incorporated by reference.

### BACKGROUND OF THE INVENTION

### Field of the Invention

The present disclosure relates to an injection molding machine and an injection molding machine system including the same, and more specifically relates to a technique for monitoring an operation of an injection molding machine.

### Description of the Background Art

Japanese Patent Laying-Open No. 2020-66152 discloses a management apparatus connected to be able to communicate with a plurality of injection molding machines. The management apparatus collects operational status information from each injection molding machine, and manages an operational status of the injection molding machine or a quality state of a molded article.

### SUMMARY OF THE INVENTION

In a system including the management apparatus as described above, each injection molding machine regularly transmits the operational status information to the management apparatus. In order for the management apparatus to monitor a state of the injection molding machine in as real-time as possible, the information needs to be transmitted from each injection molding machine to the management apparatus at relatively short intervals.

In the injection molding machine, transmission control to the management apparatus is performed together with molding control of a product. If data is frequently transmitted to the management apparatus, memory occupancy time by the transmission control increases, which may affect execution of the molding control.

The present disclosure has been made to solve such a problem, and an object of the present disclosure is to reduce influence of information transmission to a server on molding control in an injection molding machine system including an injection molding machine and a server that manages the injection molding machine.

An injection molding machine system according to a first aspect of the present disclosure includes an injection molding machine, a server, and a terminal apparatus. The server is configured to communicate with the injection molding machine, and store data indicative of an operating state of the injection molding machine. The terminal apparatus is configured to communicate with the server, and display information from the server. The injection molding machine is configured to transmit the data to the server at a predetermined timing and when the injection molding machine is not performing a molding operation.

A controller according to a second aspect of the present disclosure is used in an injection molding machine configured to communicate with an external server. The controller includes a processor, and a storage apparatus that stores a program for execution by the processor. By executing the program, the processor is configured to i) cause the injection molding machine to perform a molding operation, and ii) transmit data indicative of an operating state of the injection molding machine to the external server at a predetermined timing and when the injection molding machine is not performing the molding operation.

A controller according to a third aspect of the present disclosure is used in an injection molding machine configured to communicate with an external server. The controller includes a molding control unit, a state management unit, and a communication unit. The molding control unit is configured to control a molding operation of the injection molding machine. The state management unit is configured to manage an operating state of the injection molding machine. The communication unit is configured to transmit data indicative of the operating state of the injection molding machine to the external server. The state management unit is configured to transmit the data to the external server via the communication unit at a predetermined timing and when the injection molding machine is not performing the molding operation.

A method according to a fourth aspect of the present disclosure relates to a control method for controlling an injection molding machine configured to communicate with an external server. The method includes: (a) causing the injection molding machine to perform a molding operation; (b) determining whether or not a predetermined timing has come; (c) determining whether or not the injection molding machine is performing the molding operation; and (d) transmitting data indicative of an operating state of the injection molding machine to the external server at a predetermined timing and when the injection molding machine is not performing the molding operation.

The foregoing and other objects, features, aspects and advantages of the present invention will become more apparent from the following detailed description of the present invention when taken in conjunction with the accompanying drawings.

### BRIEF DESCRIPTION OF THE DRAWINGS

Fig. 1 is a schematic diagram of an injection molding machine system including an injection molding machine according to an embodiment.
Fig. 2 is an overall schematic diagram of the injection molding machine according to the embodiment.
Fig. 3 is a functional block diagram of a controller in Fig. 2.
Fig. 4 is a time chart for illustrating an exemplary operation of an uploading process to a server.
Fig. 5 is a flowchart of the uploading process performed in the controller.

### DESCRIPTION OF THE PREFERRED EMBODIMENTS

An embodiment of the present disclosure will be hereinafter described in detail with reference to the drawings, in which the same or corresponding portions are denoted by the same reference characters and description thereof will not be repeated.

### [Overview of Injection Molding Machine System]

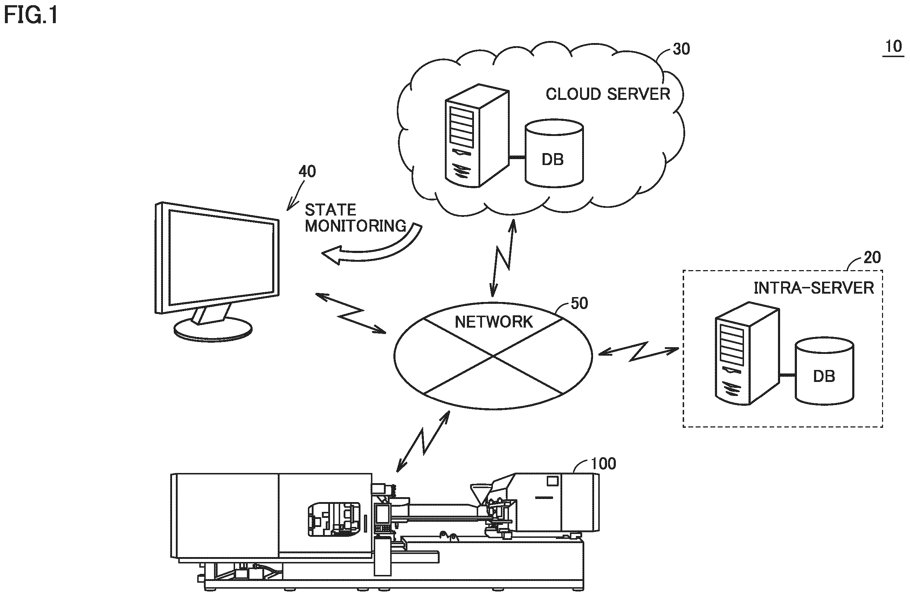

Fig. 1 is a schematic diagram of an injection molding machine system 10 including an injection molding machine 100 according to an embodiment. Injection molding machine system 10 includes, in addition to injection molding machine 100, an intra-server 20, a cloud server 30, and a terminal apparatus 40. Injection molding machine 100, intra-server 20, cloud server 30, and terminal apparatus 40 are configured to communicate in a wired or wireless manner via a network 50 such as the Internet.

Intra-server 20 and cloud server 30 are general-purpose computers, for example, each of which includes a processor and a mass storage apparatus. Intra-server 20 is a physical server located within a company that owns injection molding machine 100. Intra-server 20 may be connected to communicate with injection molding machine 100 via a company intranet instead of an external network such as network 50. Cloud server 30 is a virtual server built on network 50, and a business operator providing cloud service owns and manages apparatuses that build the server.

Intra-server 20 and cloud server 30 each regularly obtain data indicative of an operating state of injection molding machine 100 via network 50, and store the obtained data in a storage apparatus (DB). When intra-server 20 and cloud server 30 each include a display apparatus (not shown), each of intra-server 20 and cloud server 30 can monitor the operating state of injection molding machine 100 by causing the display apparatus to present the stored data.

Terminal apparatus 40 is, for example, a mobile communication terminal such as a smartphone and a tablet, or a general-purpose computer. Terminal apparatus 40 can remotely monitor the operating state of injection molding machine 100 by obtaining information from cloud server 30 through network 50.

Though one injection molding machine 100 is shown as an injection molding machine included in injection molding machine system 10 in the example of Fig. 1, a plurality of injection molding machines may be included in injection molding machine system 10. Though an exemplary system including an injection molding machine is described herein, features of the present disclosure are also applicable to systems including other industrial machines, such as a machine tool, a pressing apparatus, an extrusion molding machine, a laser processing machine, and/or an industrial robot.

### [Construction of Injection Molding Machine]

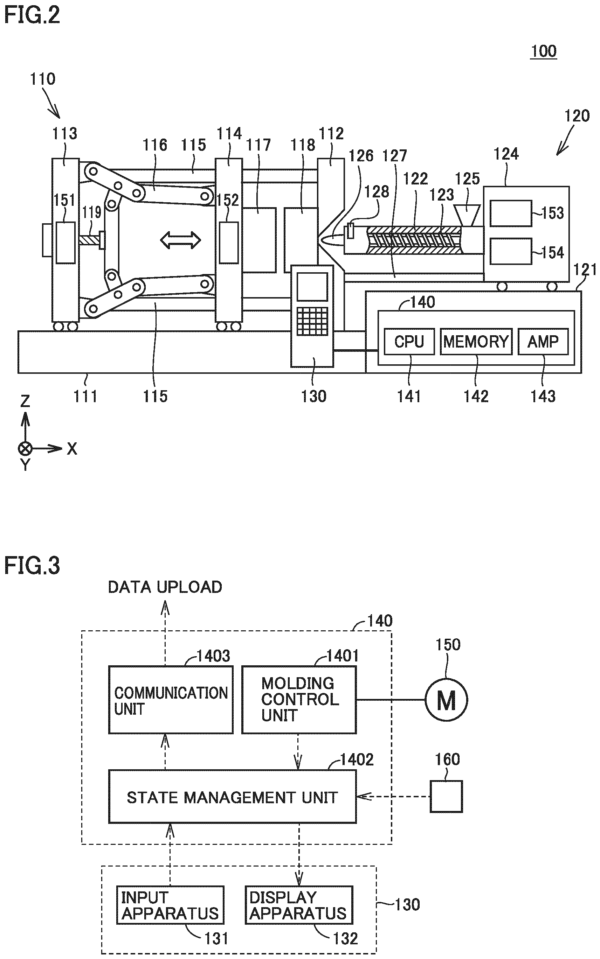

Fig. 2 is a diagram for illustrating a construction of injection molding machine 100 according to the embodiment. For the sake of convenience of description, a floor surface where injection molding machine 100 is arranged is defined as an XY plane and a direction perpendicular to the floor surface is defined as a Z-axis direction. A positive direction along a Z axis may be referred to as an upper surface side or above and a negative direction thereof may be referred to as a lower surface side or below. Though injection molding machine 100 in the embodiment is shown as a lateral injection molding machine by way of example, it is not limited to the lateral type but may be a vertical injection molding machine.

Referring to Fig. 2, injection molding machine 100 includes a mold clamping apparatus 110 that clamps a mold, an injection apparatus 120 that melts and injects an injection material, a control panel 130, and a controller 140. In Fig. 2, mold clamping apparatus 110 is arranged on a side of the negative direction along an X axis with respect to injection apparatus 120.

Mold clamping apparatus 110 includes a bed 111, a fixed plate 112, a mold clamping housing 113, a moving plate 114, a tie bar 115, a mold clamping mechanism 116, molds 117 and 118, and a ball screw 119. Bed 111 is arranged on the floor surface, and such apparatuses as fixed plate 112, mold clamping housing 113, and moving plate 114 are mounted on an upper surface thereof.

Fixed plate 112 is fixed on bed 111 at an end on a side closer to injection apparatus 120 (that is, the positive direction along the X axis). Mold clamping housing 113 is arranged on bed 111 at an end in the negative direction along the X axis. Fixed plate 112 and mold clamping housing 113 are coupled to each other by tie bar 115 including a plurality of bars. Mold clamping housing 113 is movable over bed 111 in an X-axis direction.

Moving plate 114 is arranged on bed 111 between fixed plate 112 and mold clamping housing 113. Moving plate 114 is constructed as being movable in the X-axis direction. Mold clamping housing 113 and moving plate 114 are coupled to each other by mold clamping mechanism 116. Mold clamping mechanism 116 includes a toggle mechanism. Ball screw 119 is coupled to the toggle mechanism. A servo motor 151 arranged in mold clamping housing 113 is driven to rotate ball screw 119, so that moving plate 114 can be moved relatively to mold clamping housing 113 in the X-axis direction. A direct acting type cylinder which is driven by a hydraulic pressure may be employed for mold clamping mechanism 116.

Molds 117 and 118 are arranged in moving plate 114 and fixed plate 112, respectively. Mold 117 and mold 118 are arranged as being opposed to each other between moving plate 114 and fixed plate 112. By moving mold 117 in the X-axis direction with the use of mold clamping mechanism 116, mold 117 and mold 118 can be brought in intimate contact with each other or moved away from each other. In the description below, a process of transition from a state in which molds 117 and 118 are distant from each other to a state in which the molds are in intimate contact with each other is referred to as a "mold clamping process." A process of transition from the state in which molds 117 and 118 are in intimate contact with each other to the state in which the molds are distant from each other is referred to as a "mold opening process."

While mold 117 and mold 118 are in intimate contact with each other in the mold clamping process, the molds are filled with a molten material (resin), and the molds are cooled to solidify the material. Then, a product in a desired shape can be molded. After the product is molded, with mold 117 being distant from mold 118 in the mold opening process, an ejection mechanism (not shown) arranged in moving plate 114 can be activated to take the molded article out of mold 117. The ejection mechanism is driven by a servo motor 152 arranged in moving plate 114. A process of taking out a product with the use of the ejection mechanism is referred to as an "ejection process."

Injection apparatus 120 includes a base 121, a heating cylinder 122, a drive apparatus 124, a hopper 125, a nozzle touch apparatus 127, and a temperature sensor 128. Base 121 is arranged on the floor surface of bed 111 on the side of the positive direction along the X axis, and drive apparatus 124 is mounted on an upper surface thereof. Servo motors 153 and 154 are arranged in drive apparatus 124.

Heating cylinder 122 that extends in the X-axis direction is arranged in drive apparatus 124. Heating cylinder 122 includes a heater (not shown) that heats the inside, a screw 123, and an injection nozzle 126. Screw 123 is driven by servo motor 153 in drive apparatus 124 and is rotatable around the X-axis direction as a rotation axis. Screw 123 is movable in the X-axis direction in heating cylinder 122 by servo motor 154. Injection nozzle 126 is arranged at an end of heating cylinder 122 on a side of mold clamping apparatus 110 (that is, the end in the negative direction along the X axis). Heating cylinder 122 heats and melts a resin material like beads injected from hopper 125, and the material is kneaded by screw 123 to produce a molten material. A process of melting the resin material as such is referred to as a "plasticization process."

Nozzle touch apparatus 127 is constructed by a mechanism using a hydraulic cylinder or a mechanism using a ball screw, for example, and couples drive apparatus 124 and fixed plate 112 of mold clamping apparatus 110 to each other. When nozzle touch apparatus 127 is constructed by the mechanism using a ball screw, nozzle touch apparatus 127 is driven by drive apparatus 124 and moves drive apparatus 124 and heating cylinder 122 in the X-axis direction. Injection nozzle 126 is brought in contact with a sprue bush of mold 118 in mold clamping apparatus 110 by nozzle touch apparatus 127, and the molten material is injected from injection nozzle 126 to fill a cavity in molds 117 and 118 with the molten material. Servo motor 154 applies a pressure to the molten material by moving screw 123 in heating cylinder 122 in the negative direction along the X axis to inject the molten material into molds 117 and 118 and to hold a constant pressure of the injected molten material.

The construction of a nozzle touch mechanism is not limited to the construction of moving the entire injection apparatus by the ball screw arranged between fixed plate 112 and drive apparatus 124 as described above, but may be another construction. For example, the construction may be such that an apparatus frame and a fixation member on a rear portion of the heating cylinder are coupled to each other with the use of a ball screw, and the heating cylinder itself is moved in the direction of the molds. Alternatively, the construction may be such that a slide base with the injection apparatus mounted thereon and the apparatus frame are coupled to each other with the use of a ball screw, and the injection apparatus is moved with the slide base to bring the injection nozzle in contact with the molds.

The process of injecting the molten material into molds 117 and 118 is referred to as an "injection process." A process of holding the molten material filled in molds 117 and 118 at a constant pressure and cooling the molten material after the injection process is referred to as a "pressure holding process."

Temperature sensor 128 is arranged in the vicinity of injection nozzle 126 in heating cylinder 122. Temperature sensor 128 detects a temperature of the molten material in heating cylinder 122 and outputs the temperature to controller 140. Controller 140 controls the heater based on a detection value from temperature sensor 128 and adjusts the temperature of the molten material to a desired temperature.

After the pressure holding process is completed, the mold opening process and the ejection process are performed to take out the molded product.

Injection molding machine 100 can successively form products by cyclically and repeatedly performing the mold clamping process, the injection process, the pressure holding process, the plasticization process, the mold opening process, and the ejection process.

Controller 140 is contained in base 121. Controller 140 typically includes a computing apparatus 141, a storage apparatus 142, and a servo amplifier 143 for driving servo motors 151 to 154. Computing apparatus 141 is a central processing unit (CPU) and/or a microcomputer. Storage apparatus 142 includes a volatile or nonvolatile memory such as a read only memory (ROM) and a random access memory (RAM), and a mass storage apparatus which is typically a hard disc drive (HDD) and a solid state drive (SSD). Controller 140 obtains detection values from various sensors arranged in injection molding machine 100 and controls each apparatus of injection molding machine 100 in an integrated manner.

Control panel 130 is an apparatus that allows an operator to operate injection molding machine 100, and includes a display apparatus such as a liquid crystal display and an input apparatus such as a keyboard. Control panel 130 is connected to controller 140, and can obtain a state of injection molding machine 100 and show the state and can output a user operation signal from the input apparatus to controller 140. Control panel 130 may be implemented by a touch panel including the display apparatus and the input apparatus as being integrated. Control panel 130 may be attached to bed 111 or base 121 of injection molding machine 100, or arranged at a position independent of injection molding machine 100.

### [Configuration of Controller]

Fig. 3 is a functional block diagram of controller 140 in Fig. 2. Controller 140 includes a molding control unit 1401, a state management unit 1402, and a communication unit 1403.

Molding control unit 1401 includes servo amplifier 143 described in Fig. 2, and drives a servo motor 150 included in injection molding machine 100.

State management unit 1402 collects data indicative of an operating state of injection molding machine 100, and manages injection molding machine 100 in an integrated manner. State management unit 1402 obtains information, such as a command value to each servo motor and a current value, from molding control unit 1401, and obtains detection values from various sensors 160 arranged in injection molding machine 100. State management unit 1402 also obtains operating information from the operator, the operating information being input through an input apparatus 131 of control panel 130.

State management unit 1402 displays the obtained information on a display apparatus 132 of control panel 130 to notify the operator of an operating status of injection molding machine 100. State management unit 1402 also determines whether or not injection molding machine 100 is abnormal based on the obtained information, and provides an alarm notification to the operator via display apparatus 132.

Communication unit 1403 is an interface for communicating with intra-server 20 and cloud server 30 via network 50. State management unit 1402 uploads various types of information obtained from injection molding machine 100 and information indicative of an operational state including detected abnormality information and the like (logging data) to intra-server 20 and cloud server 30 through communication unit 1403.

Intra-server 20 and cloud server 30 each store the logging data uploaded from injection molding machine 100 in the storage apparatus. As described in Fig. 1, the logging data stored in cloud server 30 is appropriately transmitted to external terminal apparatus 40 in response to a request from terminal apparatus 40. This allows a user of terminal apparatus 40 to remotely monitor the state of injection molding machine 100. When an abnormality occurs in injection molding machine 100, cloud server 30 may transmit an alarm to terminal apparatus 40.

### [Process of Uploading Data to Server]

A process of uploading the logging data to the server from injection molding machine 100 can be set, for example, to regularly transmit the data at prescribed time intervals from start-up of injection molding machine 100. Each of the prescribed time intervals is, for example, 30 seconds, 1 minute, 5 minutes, or 10 minutes.

In order to remotely monitor the state of injection molding machine 100 in as real-time as possible, the logging data needs to be uploaded at relatively short time intervals. However, injection molding machine 100 is also performing a molding operation, which is the original function of the apparatus. Thus, if the interval of data transmission is shortened, a timing of uploading of the data may come during execution of the molding operation.

In controller 140, a control program for performing the molding operation and a control program for uploading the logging data may share the same memory. If the uploading process is frequently performed in such a case, the amount of time during which the shared memory is occupied by the control program for uploading increases, which may result in interruption of the molding operation. This may result in a delay in the representation on display apparatus 132, or inability to set parameters by input apparatus 131. As a result, a cycle delay may occur due to a delay in the execution time of each process, which may cause a decrease in an operating rate of the apparatus and the occurrence of quality defects.

In the present embodiment, therefore, when the upload timing comes during execution of a cycle operation by injection molding machine 100 (during a cycle operation), the uploading process is stopped or delayed so that the molding operation is preferentially performed. Although this may result in a delay in information update during monitoring in external terminal apparatus 40, influence on the molding control of injection molding machine 100 can be reduced. Therefore, the decrease in the operating rate of the apparatus and/or the occurrence of quality defects can be prevented.

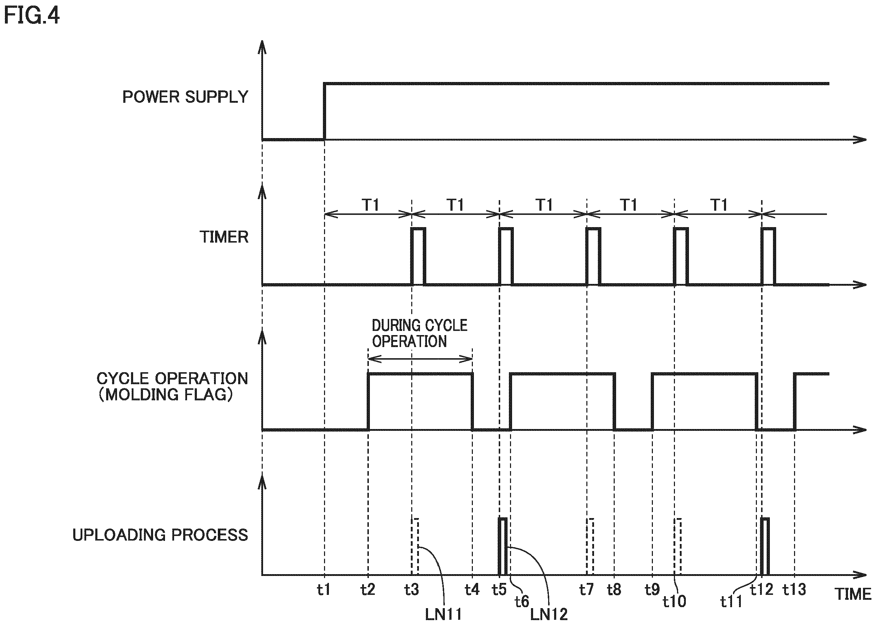

Fig. 4 is a time chart for illustrating an exemplary operation of the uploading process to the server in the embodiment. In Fig. 4, the horizontal axis represents time, and the vertical axis represents a power supply state of injection molding machine 100, a signal from an internal timer of controller 140, a cycle operating state, and a state of execution of the uploading process.

When power is supplied to injection molding machine 100 at time t1, controller 140 generates, at each prescribed time interval T1, a start pulse for transmission in order to start the uploading process to the server.

When the cycle operation is started at time t2, controller 140 turns on a "molding flag" indicating that the cycle operation is being performed. When the upload timing comes at time t3 during a period of cycle execution, the start pulse for transmission is output, but the uploading process is not performed because the molding flag is ON at time t3 (broken line LN11).

The cycle operation then ends at time t4, and when the upload timing comes at time t5 during a period from time t4 to time t6 at which the next cycle operation starts, controller 140 performs the uploading process to the server because the molding flag is OFF (solid line LN12). As a result, the logging data is transmitted to intra-server 20 and cloud server 30.

At time t7 and time t10 at which the upload timing comes during the cycle operation (that is, when the molding flag is ON), the uploading process is stopped, similarly to time t3. At time 112 at which the upload timing comes when the molding flag is OFF, the uploading process is performed.

By performing such processing, the decrease in the operating rate and/or the occurrence of quality defects caused by a delay in the molding operation due to the uploading process can be prevented.

Though the uploading process is stopped when the upload timing comes during the cycle operation in the example of Fig. 4, when the start pulse from the timer coincides with the molding flag, the uploading process may be delayed until after the cycle operation is completed. In this case, the uploading process is started immediately after the cycle operation is completed. In this way, a delay in data update during external monitoring due to continuous stops of the uploading process can be prevented.

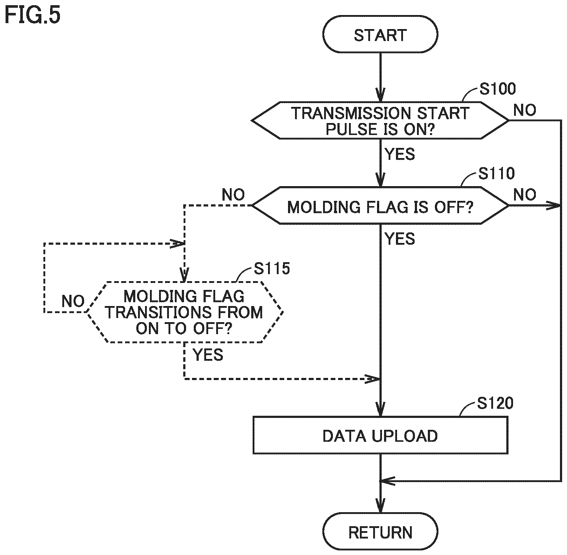

Fig. 5 is a flowchart of the uploading process performed in controller 140 of injection molding machine 100. The flowchart is called for execution from a main routine (not shown) at each control cycle of controller 140, for example.

When power is supplied to injection molding machine 100 and injection molding machine 100 is started, in step (the step is abbreviated as "S" hereinafter) 100, controller 140 determines whether or not the start pulse of the upload timing is ON.

When the start pulse is OFF (NO in S100), it is not the upload timing, and controller 140 therefore skips further processing and causes the processing to return to the main routine.

When the start pulse is ON (YES in S 100), on the other hand, controller 140 determines that the timing of uploading of the logging data has come. Then, in S 110, controller 140 determines whether or not the molding flag is OFF, that is, whether or not the cycle operation is not being performed.

When the molding flag is OFF (YES in S110), the cycle operation is not being performed, and controller 140 therefore causes the processing to proceed to S120, and uploads the collected logging data to intra-server 20 and cloud server 30 via network 50.

When the molding flag is ON (NO in S110), on the other hand, controller 140 skips further steps and causes the processing to return to the main routine in order to prevent influence on the molding operation.

If, instead of the uploading process being stopped, the uploading process is delayed until after the cycle is completed, when controller 140 determines that the molding flag is ON (NO in S110), controller 140 causes the processing to proceed to S115 indicated by a broken line in Fig. 5. Controller 140 monitors a transition from ON to OFF of the molding flag in S115, and controller 140 causes the processing to proceed to S120 at a timing when the molding flag is transitioned to OFF and performs the uploading process.

By performing the control in accordance with the processing as described above, execution of the uploading process during the molding operation by injection molding machine 100 can be prevented. Therefore, influence of the information transmission to the server on the molding control can be reduced.

When a condition for starting the molding operation is satisfied during execution of the uploading process, the uploading process may be temporarily suspended and the transmission of remaining data may be resumed after the cycle operation is completed. Alternatively, when 50% or more of the logging data has already been transmitted and the transmission of remaining data will be completed in a relatively short amount of time, the uploading process may be continued even when the condition for starting the molding operation is satisfied, and the molding operation may be started after the transmission of the logging data is completed.

The timer that determines the upload timing can be set at input apparatus 131 in injection molding machine 100. In addition, the timer may be able to be remotely set from any one of intra-server 20, cloud server 30, and/or terminal apparatus 40.

Note that "cloud server 30" in the embodiment corresponds to the "server" and the "external server" in the present disclosure.

### [Aspects]

It will be understood by those skilled in the art that the embodiment described above is a specific example of aspects below.

(Clause 1) An injection molding machine system according to one aspect includes an injection molding machine, a server, and a terminal apparatus. The server is configured to communicate with the injection molding machine, and stores data indicative of an operating state of the injection molding machine. The terminal apparatus is configured to communicate with the server, and display information from the server. The injection molding machine is configured to transmit the data to the server at a predetermined timing and when the injection molding machine is not performing a molding operation.

(Clause 2) In the injection molding machine system according to Clause 1, when a condition for starting the molding operation is satisfied during transmission of the data to the server, the injection molding machine is configured to suspend the transmission of the data and starts the molding operation.

(Clause 3) In the injection molding machine system according to Clause 2, when the transmission of the data is suspended, the injection molding machine is configured to resume the transmission of the data after the molding operation is completed.

(Clause 4) In the injection molding machine system according to Clause 1, when a condition for starting the molding operation is satisfied during transmission of the data to the server, the injection molding machine is configured to start the molding operation after the transmission of the data is completed.

(Clause 5) In the injection molding machine system according to any one of Clauses 1 to 4, the predetermined timing can be set from the terminal apparatus and/or the server.

(Clause 6) In the injection molding machine system according to any one of Clauses 1 to 5, the predetermined timing can be set in the injection molding machine.

(Clause 7) In the injection molding machine system according to any one of Clauses 1 to 6, when an abnormality occurs in the injection molding machine, the server is configured to transmit alarm information to the terminal apparatus.

(Clause 8) A controller according to one aspect is used in an injection molding machine configured to communicate with an external server. The controller includes a processor, and a storage apparatus that stores a program for execution by the processor. By executing the program, the processor is configured to i) cause the injection molding machine to perform a molding operation, and ii) transmit data indicative of an operating state of the injection molding machine to the external server at a predetermined timing and when the injection molding machine is not performing the molding operation.

(Clause 9) A controller according to one aspect is used in an injection molding machine configured to communicate with an external server. The controller includes a molding control unit, a state management unit, and a communication unit. The molding control unit controls a molding operation of the injection molding machine. The state management unit is configured to manage an operating state of the injection molding machine. The communication unit is configured to transmit data indicative of the operating state of the injection molding machine to the external server. The state management unit is configured to transmit the data to the external server via the communication unit at a predetermined timing and when the injection molding machine is not performing the molding operation.

(Clause 10) An injection molding machine according to one aspect includes the controller according to Clause 8 or 9.

(Clause 11) A method for controlling an injection molding machine configured to communicate with an external server includes: (a) causing the injection molding machine to perform a molding operation; (b) determining whether or not a predetermined timing has come; (c) determining whether or not the injection molding machine is performing the molding operation; and (d) transmitting data indicative of an operating state of the injection molding machine to the external server at a predetermined timing and when the injection molding machine is not performing the molding operation.

Although the embodiment of the present invention has been described, it should be understood that the embodiment disclosed herein is illustrative and non-restrictive in every respect. The scope of the present invention is defined by the terms of the claims, and is intended to include any modifications within the scope and meaning equivalent to the terms of the claims.

## Claims

1. An injection molding machine system comprising:
an injection molding machine (100);
a server (30) that is configured to communicate with the injection molding machine (100) and that stores data indicative of an operating state of the injection molding machine (100); and
a terminal apparatus (40) that is configured to communicate with the server (30) and that displays information from the server (30), wherein
the injection molding machine (100) is configured to transmit the data to the server (30) at a predetermined timing and when the injection molding machine (100) is not performing a molding operation.

2. The injection molding machine system according to claim 1, wherein
when a condition for starting the molding operation is satisfied during transmission of the data to the server (30), the injection molding machine (100) is configured to suspend the transmission of the data and start the molding operation.

3. The injection molding machine system according to claim 2, wherein
when the transmission of the data is suspended, the injection molding machine (100) is configured to resume the transmission of the data after the molding operation is completed.

4. The injection molding machine system according to claim 1, wherein
when a condition for starting the molding operation is satisfied during transmission of the data to the server (30), the injection molding machine (100) is configured to start the molding operation after the transmission of the data is completed.

5. The injection molding machine system according to any one of claims 1 to 4, wherein
the predetermined timing can be set from the terminal apparatus (40) and/or the server (30).

6. The injection molding machine system according to any one of claims 1 to 5, wherein
the predetermined timing can be set in the injection molding machine (100).

7. The injection molding machine system according to any one of claims 1 to 6, wherein
when an abnormality occurs in the injection molding machine (100), the server (30) is configured to transmit alarm information to the terminal apparatus (40).

8. A controller (140) for use in an injection molding machine (100) configured to communicate with an external server (30), the controller comprising:
a processor (141); and
a storage apparatus (142) that stores a program for execution by the processor (141), wherein
by executing the program, the processor (141) is configured to
cause the injection molding machine (100) to perform a molding operation, and
transmit data indicative of an operating state of the injection molding machine (100) to the external server (30) at a predetermined timing and when the injection molding machine (100) is not performing the molding operation.

9. A controller (140) for use in an injection molding machine (100) configured to communicate with an external server (30), the controller comprising:
a molding control unit (1401) that controls a molding operation of the injection molding machine (100);
a state management unit (1402) that manages an operating state of the injection molding machine (100); and
a communication unit (1403) that transmits data indicative of the operating state to the external server (30), wherein
the state management unit (1402) is configured to transmit the data to the external server (30) via the communication unit (1403) at a predetermined timing and when the injection molding machine (100) is not performing the molding operation.

10. An injection molding machine comprising the controller (140) according to claim 8 or 9.

11. A method for controlling an injection molding machine (100) configured to communicate with an external server (30), the method including:
(a) causing the injection molding machine (100) to perform a molding operation;
(b) determining whether or not a predetermined timing has come;
(c) determining whether or not the injection molding machine (100) is performing the molding operation; and
(d) transmitting data indicative of an operating state of the injection molding machine (100) to the external server (30) at a predetermined timing and when the injection molding machine (100) is not performing the molding operation.
